# EUROPÄISCHE PATENTSCHRIFT

(11) **EP 0 882 267 B1**
(45) Veröffentlichungstag und Bekanntmachung des Hinweises auf die Patenterteilung: **26.04.2000**
(21) Anmeldenummer: 97915275.8
(22) Anmeldetag: 04.02.1997
(51) Int. Cl.: G06F 15/16

(54) **MEHRPROZESSOR-ZENTRALEINHEIT**
MULTI-PROCESSOR CENTRAL PROCESSING UNIT
UNITE CENTRALE A MULTIPROCESSEUR

(30) Priorität: 22.02.1996 DE 19606629
(43) Veröffentlichungstag der Anmeldung: 09.12.1998
(73) Patentinhaber: Siemens Nixdorf Informationssysteme AG, 33106 Paderborn (DE)
(72) Erfinder: LUEDTKE, Harald, D-33106 Paderborn (DE)
(74) Vertreter: Epping, Wilhelm, Dr.-Ing.
(86) Internationale Anmeldenummer: DE9700216
(87) Internationale Veröffentlichungsnummer: WO9731318

(56) Entgegenhaltungen:
- EP-A- 0 333 537
- EP-A- 0 345 738
- WO-A-94/01815

## Beschreibung

### Technisches Gebiet

Das Verfahren betrifft modulare Mehrprozessor-Systeme.

### Stand der Technik

Hochleistungs-Rechnersysteme werden häufig als Mehrprozessorsysteme ausgebildet. Gerade für Transaktionssysteme wie Buchungssysteme und Reservierungssysteme ist eine große Anzahl von Prozessoren nützlich, um ein gleichmäßiges Antwortzeit-Verhalten zu erreichen. Zweckmäßigerweise werden dabei Moduln verwendet, die über eine gemeinsame Rückwand miteinander verbunden werden. Jeder Modul, im folgenden als Zentraleinheit bezeichnet, enthält einen oder mehrere Prozessoren, die über ein Bussystem auf der Rückwand gekoppelt werden.

Der für die Prozessoren zugängliche Speicher kann einerseits als eigener Speichermodul mit der Rückwand verbunden werden. Dieses führt jedoch dazu, daß die Bandbreite des Bussystems die Leistungsfähigkeit des Gesamtsystems beschränkt.

Es wurde daher vorgeschlagen, den Speicher auf die Zentraleinheiten zu verteilen und daher auf jeder Zentraleinheit auch Speicher anzuordnen, welcher sowohl von dem Prozessor direkt als auch von den anderen Prozessoren über das Bussystem erreichbar ist. Die jeweiligen Speicher werden durch Adressübersetzung in den allen Prozessoren gemeinsamen Adressraum abgebildet. Auf Programme oder Daten, welche sich in dem lokalen Speicher befinden, kann besonders schnell und effizient zugegriffen werden. Daher wird dieser Speicher auch als ein einziger zusammenhängender Block in den Adressraum eingebracht.

Dennoch bleibt das Bussystem ein Engpaß bei Höchstleistungsrechnern mit mehreren Prozessoren. Jeder Zugriff außerhalb des lokalen Speichers wird über das Bussystem abgewickelt. Außer in statisch konfigurierbaren Prozeßsteuer- oder Transaktionssystemen ist es selten erreichbar, daß der überwiegende Teil der Speicherzugriffe auf den lokalen Speicher erfolgt. Selbst wenn beispielsweise bei einem Vierprozessor-Rechner die Hälfte der Zugriffe auf den lokalen Speicher erfolgte, müsste die Bandbreite des Bussystems doppelt so hoch wie die eines Prozessors sein. Ein Übergang auf acht oder sechzehn Prozessoren ist daher ohne Steigerung der Bandbreite des Bussystems mit einem nur stark unterproportionalem Leistungszuwachs verbunden.

Ferner ergibt sich ein Problem insofern, als schnelle Bussysteme nicht beliebig lang sein können. Signallaufzeiten und -Impedanzen beschränken die Buslänge bei den zur Zeit benutzten Frequenzen und Techniken auf etwa 30cm. Bei einer vorgegebenen und nicht wesentlich unterschreitbaren Breite einer Zentraleinheit von 3cm sind damit maximal 10 Module und damit 10 Prozessoren möglich.

Für Hochleistungs-Transaktionsverarbeitungssysteme sind aber eine noch größere Anzahl von Prozessoren erwünscht. Der Beschränkung der Anzahl der Moduln kann dadurch begegnet werden, daß jeder Zentraleinheits-Modul einen gemeinsamen Speicher und mehrere Prozessoren enthält. Da jede Zentraleinheit jedoch über den Bus der Rückwand mit dem Speicher auf den anderen Zentraleinheiten verbunden ist, steigt die Last auf dem Bussystem wiederum soweit an, daß der Bus die die Leistung begrenzende Komponente darstellt.

Eine Alternative zu einem durch ein Bussystem gekoppelten Mehrrechnersystem ist ein Mehrrechnersystem, dessen Prozessoren nach dem IEEE "Standard for Scalable Coherent Interface" (SCI), IEEE STD 1596-1992 (ISBN 1-55937-222-2), verbunden sind. Es handelt sich dabei um Punkt-zu-Punkt-Verbindungen von einem zu dem nächsten Prozessor. Damit jeder Prozessor auf den Speicher eines jeden anderen Prozessors zugreifen kann, definiert SCI ein Transfer-Protokoll, in dem jeder Prozessor für ihn nicht bestimmte Pakete an seinen Nachbarn weiterreicht, so daß eine wie in Kap. 1.3.4 des SCI-Dokuments beschriebene Ringstruktur benötigt wird, bei der jeder Prozessor mindestens ein Datenpaket puffern kann. Hierdurch entstehen Verzögerungen, die eine beliebige Anzahl von Prozessoren zwar ermöglichen, aber deren Leistung beeinträchtigen. Auch ist hier eine, wenn auch gegenüber Bussystemen höhere, Bandbreitenbegrenzung gegeben. Daher wird u.a. in Kap. 1.3.5 vorgeschlagen, eine zweidimensionale Gitterstruktur aufzubauen, bei der jeder Prozessor lediglich die anderen Prozessoren in derselben Zeile oder Spalte erreichen kann. Andere Verbindungen sind über in Kap. 1.4.6 "agents" genannten Vermittler abzuwickeln. Das SCI-Protokoll bedingt jedoch einen recht hohen Aufwand.

Aufgabe der Erfindung ist es daher, eine Zentraleinheit für ein Mehrrechner-System anzugeben, welche die oben genannten Nachteile vermeidet.

### Darstellung der Erfindung

Die Erfindung kombiniert Direktverbindungen mit Bussystemen und erlaubt damit, die Anzahl der Bussysteme zu vervielfachen und somit denselben Effekt wie ein einziges Bussystem entsprechend vervielfachter Bandbreite zu erreichen.

Die bevorzugte Lösung besteht darin, daß Baugruppen mit je zwei Prozessoren und zwei getrennten Speichern verwendet werden. Jeder Prozessor greift auf den Hauptspeicher über einen Koppler zu, an den einer der beiden Speicher unmittelbar angeschlossen ist. Jeder Koppler ist mit dem anderen Koppler auf der Baugruppe direkt verbunden und besitzt ferner einen Anschluß an ein Bussystem, so daß Speicherzugriffe, die weder von dem unmittelbar angeschlossenen Speicher noch von dem an dem direkt angeschlossenen Koppler erfüllt werden, über das Bussystem erfolgen. Damit erlaubt diese Lösung auf einfache Art die Verdopplung der Bandbreite der Verbindung der Baugruppen untereinander, indem zwei Bussysteme verwendet werden.

In einer Fortbildung der Erfindung hat jeder Koppler eine Direktverbindung zu einem weiteren Koppler, welche auf zusätzlichen Anschlüssen an der Baugruppe liegt. Damit können jeweils zwei Baugruppen zu einer Zentraleinheitsscheibe verbunden werden, bei der vier Koppler ringförmig verbunden sind. In diesem Fall wird eine Art der Direktverbindung zwischen den Kopplern gewählt, die auch eine indirekte Verbindung zu dem diagonal gegenüberliegenden Koppler zuläßt.

Es wird also erreicht, daß ein ein Bussystem benötigender Speicherzugriff nur das Bussysstem benutzt, an das der Koppler angeschlossen ist, der den benötigten Speicher direkt angeschlossen hat. Die anderen Datenpfade werden über auf der jeweiligen Zentraleinheit befindliche Verbindungen geführt. Gleichzeitig ist durch die Verwendung von Bussystemen flexible Erweiterbarkeit und die Anbindung von Peripherie in bekannter Art möglich.

Dabei ist eine besonders günstige Lösung durch Adressverschränkung möglich. Hierzu bestimmen niedrigwertige Bits der Adresse den Koppler, der den Speicherzugriff tätigt. Bei zwei Prozessoren pro Zentraleinheit und einer Blockgröße von 32 Bytes der Pufferspeicher (Cache) dient damit das sechste (oder siebte oder achte usw.) Bit zur Auswahl des Kopplers. Diese Fortbildung geht von einer Anzahl von Kopplern aus, die eine Potenz von zwei ist. Die Adressauflösung auf dem Bussystem wird in bekannter Art dadurch erreicht, daß die Adresse auf den Bus gelegt wird und der den zugehörigen Speicher besitzende Koppler den Buszyklus vollendet. Damit ist eine Adressierung der den bezogenen Speicher enthaltenden Zentraleinheit nicht notwendig. Damit braucht, wie bei einem Bussystem üblich, beim Hinzufügen einer weiteren Zentraleinheit durch das Bussystem keine Änderungen in der Adressierung erfolgen, da die Verteilung auf die Koppler gleich bleibt.

Diese Lösung erscheint zunächst wenig vorteilhaft, weil selbst ein Programm geringer Größe, das auf einem Prozessor ausgeführt wird, nicht nur den an den Koppler des Prozessors direkt angeschlossenen Speicher, sondern auch den an den oder die anderen Koppler angeschlossenen Speicher benutzt. Indem jedoch Pufferspeicher (cache) vorhanden sind und die Verbindungen zwischen den Kopplern als Punkt-zu-Punkt-Verbindungen besonderes schnell aufgebaut sein können, wird dieser Nachteil durch die leichte Erweiterbarkeit aufgehoben.

Es handelt sich also um Zentraleinheiten mit zwei oder mehr Gruppen von je einem Prozessor, einem Speicher und einem Koppler, wobei Prozessor und Speicher mit genau einem Koppler und die Koppler untereinander verbunden sind, durch Adressverschränkung jeder Gruppe ein gleichmäßig über den Adressraum verteilter Speicherbereich disjunkt zugeordnet ist und jeder Koppler einen Zugriff auf den seiner Gruppe zugeordneten Speicherbereich selbst erfüllt und andere Zugriffe über die Verbindung zu dem bezogenen Koppler erfüllt. Die Zentraleinheiten erhalten Schnittstellen, um Vielfachsysteme aufzubauen.

### Kurzbeschreibung der Zeichnungen

Es zeigen
- Fig. 1: eine Zentraleinheit gemäß einer bevorzugten Ausführungsform der Erfindung mit zwei Prozessoren, zwei Speichern und zwei Kopplern, zwei Direktverbindungen und zwei Busanschlüssen,
- Fig. 2: eine Kombination von zwei Zentraleinheiten zu einer virtuellen Vierprozessor-Zentraleinheit, die mit vier Bussystemen als Teil eines größeren Mehrprozessorsystems dienen kann,
- Fig. 3: eine Kombination von vier Doppelprozessor-Zentraleinheiten zu einem mittels zweier Bussysteme verbundenen Achtfach-Mehrprozessor-System.
- Fig. 4: eine Kombination von vier Doppelprozessor-Zentraleinheiten zu einer achtfach-Prozessorscheibe, die mittels der acht Bussysteme mit weiteren achtfach-Prozessorscheiben verbunden werden kann.

### Detaillierte Beschreibung der Erfindung

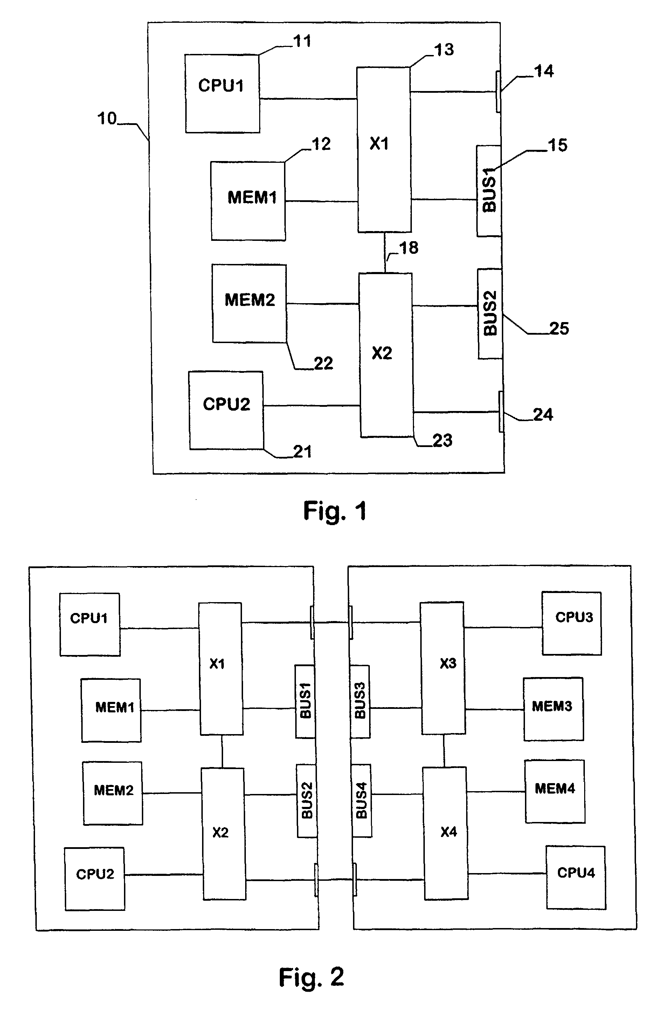

In Fig. 1 ist eine Zentraleinheit 10 schematisch dargestellt, die zwei Prozessoren 11, 21, zwei Speicher 12, 22 und zwei Koppler 13, 23 hat. Die obere Gruppe besteht aus einem Prozessor 11, einem Speicher 12 und einem Koppler 13; die untere Gruppe aus einem anderen Prozessor 21, Speicher 22 und Koppler 23. Beide Prozessoren verwenden denselben Adressraum und können den Speicher des jeweils anderen Prozessors benutzen. Zu diesem Zweck übermittelt ein Prozessor den Zugriffswunsch an den an ihn angeschlossenen Koppler. Dieser verwendet entweder den direkt angeschlossenen Speicher oder gibt den Zugriffswunsch über die Verbindung 18 an den anderen Koppler weiter, auf daß er durch den dort angeschlossenen Speicher erfüllt werden kann.

Für die Verbindung der Koppler untereinander durch Punkt-zu-Punkt-Verbindungen sind verschiedene Techniken verwendbar. Die oben angegene SCI-Verbindung nach IEEE STD 1596-1992 ist ein Möglichkeit. In der Regel jedoch genügt eine einfachere Verbindung über uni- oder bidirektional betriebene Daten- und Adressleitungen sowie Übernahme- und Quittungssignale, wie sie allgemein bekannt sind. Für den Fall, daß eine indirekte Erreichbarkeit notwendig ist, werden ein oder zwei zusätzliche Adressleitungen verwendet, die angeben, für welchen Koppler die Signale bestimmt sind. Die Signale werden dabei nicht gespeichert, sondern, sofern möglich, direkt auf die Verbindung zu dem nächsten Koppler weitergeschaltet. Die Ausführung einer solchen Schaltung ist dem Fachmann allgemein zugänglich und wird im weiteren als bekannt vorausgesetzt.

Dabei muß festgelegt sein, welcher Bereich des Adressraums vom ersten Koppler 13 und dem an ihm angeschlossenen Speicher 12 und welcher zu Koppler 23 und Speicher 22 gehört. Üblicherweise werden jeweils zusammenhängende Speicherbereiche aus dem gesamten Adressraum der Prozessoren dem Speicher 12 und dem Speicher 22 zugeordnet und durch Adressvergleicher bestimmt. In diesem Fall könnten die Doppelprozessor-Zentraleinheiten zu Mehrprozessor-Systemen kombiniert werden, indem (nicht in Fig. 1 dargestellt) die Zentraleinheit eine Schnittstelle für ein gemeinsames Bussystem erhält und eine Speicherverwaltung hinzugefügt wird, welche bestimmt, ob der lokale Speicher betroffen ist oder auf den Bus und damit auf Speicherbereiche der anderen Zentraleinheiten zuzugegriffen werden soll. Liegt der angesprochene Speicherbereich weder im direkt angeschlossenen Speicher noch in dem an die andere Koppeleinheiten angeschlossenen Speicher, so wird der Speicherzugriff über den Bus abgewickelt. Insbesondere dann, wenn die beiden Speicherbereiche einer Zentraleinheit bündig aneinander passen und die Speicher in jeder Zentraleinheit gleich groß sind, können einfache Tabellenzugriffe für die Entscheidung verwendet werden, über welche Verbindung ein Koppler den Zugriff durchführt.

In der bevorzugten Ausführungsform der Erfindung wird jedoch eine andere Aufteilung des Speichers verwendet. Dabei werden die Adressbereiche verschränkt und der physikalische Speicher in kleinen Einheiten über den Adressraum verteilt. Diese Adressierung ist als Interleaving bekannt, wenn von einem oder mehreren Prozessoren auf gleichberechtige, d.h. von allen Prozessoren mit gleicher Effizienz zugreifbare Speichermodule, die eine Erholzeit nach einem Zugriff benötigen, zugegriffen wird. Dies wird beispielsweise in dem Buch "Digital Systems: Hardware Organisation and Design", F.J.Hill und G.R. Peterson, New York 1973, ab Abschnitt 14.3 unter dem Stichwort "Interleaving" beschrieben. Indem beispielsweise die geraden Adressen auf eine Speicherbank und die ungeraden Adressen auf eine zweite Speicherbank gelegt werden, kann bei zwei aufeinanderfolgenden Speicherzugriffen während der Erholzeit des ersten Speichers bereits der Zugriff auf den zweiten Speicher erfolgen. Interleaving wird also bislang dazu benutzt, die Erholungszeit von zwei oder mehr Speicherbänken zu kompensieren.

Die dem Interleaving ähnliche, in der Erfindung verwendete Technik wird im folgenden Adressverschränkung genannt. Hierbei wird der Adressraum in viele gleich große Blöcke, im folgenden als Zeilen bezeichnet, eingeteilt. Jede Zeile muß mindestens so groß wie die zwischen Prozessor bzw. Speicher und Koppler übertragene Datenmenge sein. Insbesondere bei Verwendung von Pufferspeichern (Cache) wird diese Informationseinheit als "Cache-Line" bezeichnet. Eine Zeile ist meistens ein Vielfaches der Wortbreite des verwendeten Prozessors. Bei der, in der Praxis wohl immer gegebenen, Verwendung von Pufferspeichern ist jedoch die Wortbreite der Befehle des Prozessors ohne Bedeutung; daher wird der besseren Übersichtlichkeit halber die ungeteilt zwischen Prozessor bzw. Speicher und Koppler übertragene Datenmenge im folgenden als Speicherwort bezeichnet. Die Adressverschränkung erfolgt nun auf Basis eines Speicherworts oder eines Vielfachen davon. In jedem Fall ist bei zweifacher Verschränkung ein Bit der binären Adresse ausreichend, um die Speicherbank zu bestimmen. Gewöhnlicherweise wird eine Anzahl von Speicherbänken verwendet, welche eine Potenz von Zwei ist, so daß die Speicherbank durch Extraktion eines Bitfeldes bestimmt werden kann. Durch Messungen kann ermittelt werden, ob eine Verschränkung mit den letzten Adressbits oder in größeren Einheiten vorteilhafter ist. Eine Verschränkung beispielsweise auf dem 16-fachen eines Speicherwortes ist problemlos durch Umverdrahtung der Adressleitungen erreichbar, so daß im Folgenden der Einfachheit halber von Adressverschränkung auf dem oder den untersten Bits ausgegen wird, ohne daß die Erfindung hierauf beschränkt ist. Im Gegensatz hierzu benutzt Interleaving immer die größtmögliche Verteilung, also immer die niedrigstwertigsten Adressbits.

Die Adressverschränkung dient jedoch bei der vorliegenden Erfindung nicht dazu, Erholzeiten des Speichers zu überbrücken. Sie dient vielmehr in Kombination, da zu jeder Speichereinheit auch ein Prozessor gehört, dazu, eine Zentraleinheit bereitzustellen, die auf einfache Art und mit geringem Leistungsverlust zu Mehrprozessorsystemen zusammengeschlossen werden kann. Es erscheint dabei zunächst ungünstig, die beiden auf der Zentraleinheit befindlichen Speicher zu verschränken anstatt aneinander angrenzen zu lassen. Bei aneinander grenzendem Speicher kann ein Prozess, der sich im wesentlichen auf den Bereich des Speichers beschränkt, der zu dem Prozessor lokal ist, besonders effizient ablaufen. Bei verschränktem Speicher jedoch muß praktisch jeder Prozess auch den nicht-lokalen Speicher auf dem Umweg über die Verbindung der beiden Koppler benutzen. Da jedoch, wie genauere Untersuchungen mit den heute relevanten Betriebssystemen ergeben haben, in der Praxis kaum ein Prozeß auf einen bestimmten Speicherbereich beschränkt werden kann, ist der genannte Vorteil von aneinander bündig anschließenden Speicherbereichen effektiv nicht realisierbar. Die Verschränkung der Speicher bedeutet damit praktisch keinen Nachteil. Es hat sich vielmehr als Vorteil herausgestellt, sofern die Betriebssoftware gemeinschaftliche Speicherbereiche, insbesondere für das Betriebssystem, benutzt. Bei der bisherigen Anordnung war der Prozessor benachteiligt, der diese Bereiche nicht im lokalen Speicher hatte. Die Ausführungszeit eines Prozesses war also auf dem einen Prozessor langsamer als auf dem anderen. Dies wird durch die Erfindung vermieden, ohne daß die Gesamtleistung des Systems leidet.

Die bislang beschriebene Doppelprozessor-Zentraleinheit wird auf verschiedene, gleichzeitig einfache und effiziente Art zu Mehrrechnersystemen zusammengeschlossen. Hierzu sind sowohl die Direktschnittstellen 14, 24 zur Punkt-zu-Punkt-Verbindung von Kopplern als auch die BusSchnittstellen 15 und 25 geeignet.

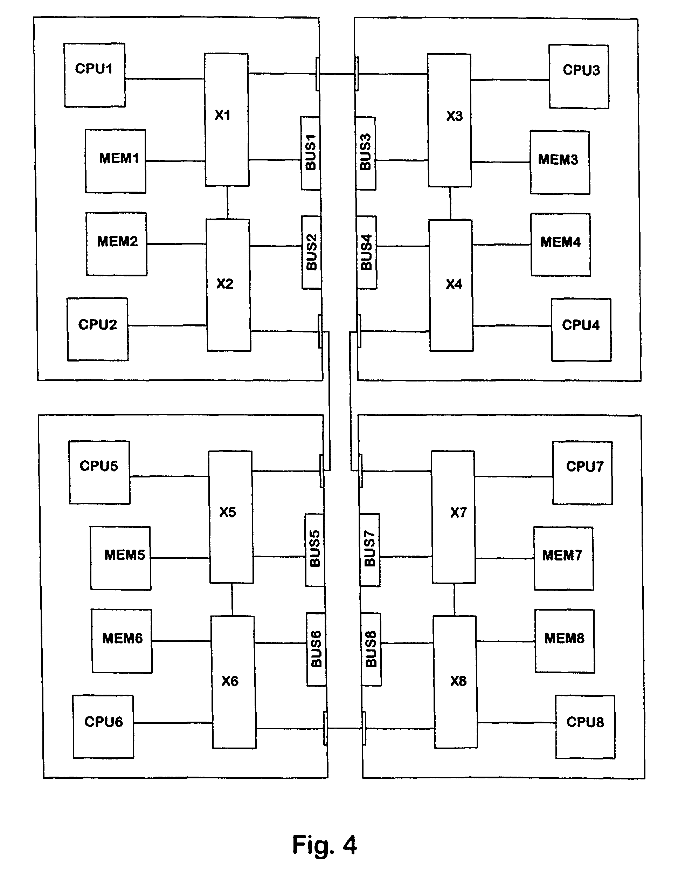

Wie aus Fig. 1 hervorgeht, wird pro Koppler eine Direktverbindungsschnittstelle 14 bzw. 24 vorgesehen. Damit können zwei Zentraleinheiten zu einer Zentraleinheit mit vier Prozessoren und vierfach-Interleaving zusammengeschlossen werden, wie in Fig. 2 dargestellt ist. Eine zweite gleichartige Zentraleinheit besitzt die Koppler X3 und X4, die Prozessoren CPU3 und CPU4 sowie den Speicher MEM3 und MEM4. Die Koppler X1, X2, X3 und X4 sind ringförmig miteinander verbunden. Der Speicher wird jetzt vierfach verschränkt. Dies kann in einfacher Weise durch Hinzunahme eines weiteren Adressbits während der Installation z.B. durch einen Schalter (Jumper) auf der Zentraleinheit erfolgen, so daß eine einzige Art von Zentraleinheiten sowohl als Doppelprozessoren als auch als Vierfachprozessoren benutzt werden können. Aus den beiden Adressbits kann jeder Koppler ermitteln, ob auf den direkt angeschlossenen, den Speicher eines benachbarten Kopplers oder den Speicher eines gegenüberliegenden Kopplers zugegriffen werden soll. Hierfür sind keine Vergleicher notwendig; da nur zwei Bits aus der Adresse in Bezug auf die beiden Bits, die die Nummer des Kopplers angeben, in vier Bits für die Ansteuerung der entsprechenden Datenpfade umgesetzt werden müssen, kann dies ohne weiteres durch mitteldichte Integration wie Gatter, Multiplexer und Dekoder erreicht werden. Insbesondere dient ein Bit der Adresse, gegebenenfalls durch ein Exklusiv-Oder invertiert, zur Entscheidung, ob bei nicht direkt benutzbarem Speicher der Koppler auf derselben Zentraleinheit oder der auf der anderen über die Schnittstelle 14, 24 angesprochen werden muß. Wie in Fig. 4 dargestellt, kann das Prinzip auch zur Bildung einer Achtfach-Scheibe verwendet werden, indem die vier Doppelprozessor-Zentraleinheiten an den jeweils beiden Direktschnittstellen ringförmig gekoppelt werden. Der durch die ringförmige Struktur bedingte relative Leistungsverlust wird dadurch ausgeglichen, daß Direktverbindungen eine größere Geschwindigkeit zulassen als Bussysteme, so daß die Achtfach-Scheibe relativ bessere Leistungen zeigt als acht durch ein Bussystem verbundene Zentraleinheiten.

Die hierzu benötigten Punkt-zu-Punkt-Verbindungen sind dem Fachmann bekannt. Die dazu benötigten Verbindungsleitungen übermitteln den relevanten Teil der betroffenen Adresse und die Daten. Es können ohne weiteres beidseitig abgeschlossene Leitungen mit offenem Kollektor benutzt werden. Da keine Mittelanschlüsse wie bei Bussystemen vorhanden sind und auch keine Arbitrierung notwendig ist, erreichen solche Punkt-zu-Punkt-Verbindungen bei einfachem Aufbau hohe Arbeitsgeschwindigkeiten. Falls mehr als drei Koppler ringförmig verbunden sind, muß eine Möglichkeite vorhanden sein, daß ein Koppler einen anderen indirekt über einen benachbarten Koppler erreicht. Hierzu sind Gruppenadress- und Quittungsleitungen vorgesehen, die gleichfalls als Punkt-zu-Punkt-Verbindungen ausgeführt sind. Erhält ein Koppler eine Anfrage, bei der die Gruppenadressleitung nicht seine Gruppennummer darstellt, dann werden sowohl die Gruppenadressen als auch alle anderen Leitungen auf die andere Punkt-zu-Punkt-Verbindung gelegt. Quittungssignale werden in bekannter Art mit übertragen, da der angesprochene Koppler ohnehin die über die Punkt-zu-Punkt-Verbindungen eintreffenden Anfragen möglicherweise nicht sofort erledigen kann, weil sein eigener Prozessor eine Speicher-Anfrage gestellt hat, die noch nicht erledigt ist.

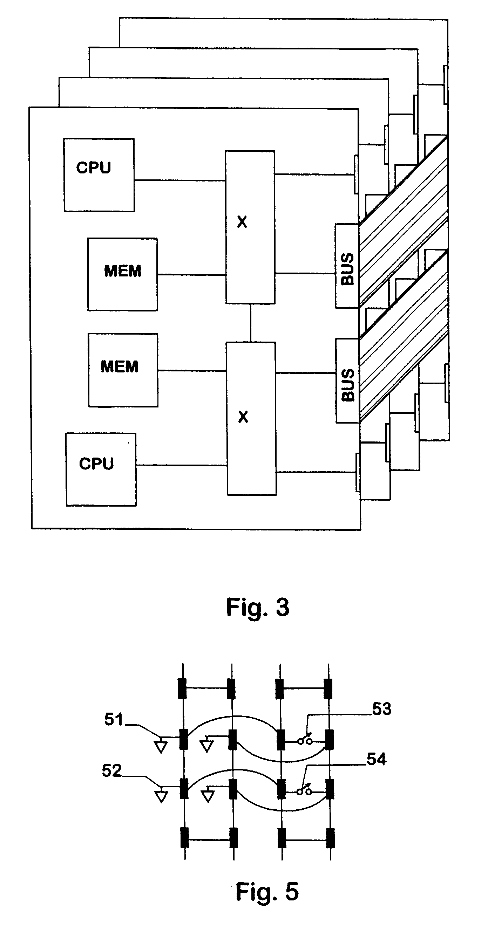

Unter Verwendung der Busschnittstellen 15, 25 werden Mehrprozessor-Systeme kombiniert, bei denen eine variable Anzahl von Zentraleinheiten kombiniert wird. In Fig. 3 ist eine solche Anordnung mit vier Doppelprozessor-Zentraleinheiten dargestellt. Für diese Anordnung wird bevorzugt zweifach-Interleaving, auf Basis der Prozessor- oder Cache-Wortbreite oder eines Vielfachen davon, verwendet, um zu bestimmen, ob ein Speicherzugriff des Prozessors über die Verbindung der beiden Koppler abgewikkelt wird oder der Koppler den Zugriff lokal bzw. über den an ihn angeschlossenen Bus 15, 25 durchführt. Wie in Fig.3 angedeutet, werden zwei Bussysteme benutzt, die jeweils die Zentraleinheiten miteinander verbinden. Die derart durch den Bus verbundenen Koppler bewirken jeweils den Zugriff auf dieselbe Speicherklasse bezüglich der Verschränkung. Der Koppler benutzt also, nachdem auf Basis der Verschränkung festgelegt ist, daß der Zugriff nicht durch einen direkt (oder indirekt in einem Ring) verbundenen Koppler erfolgt, Speicherverwalter als weitere Mittel, um zu entscheiden, ob die Adresse zu dem lokalen Speicher führt oder über das Bussystem anzufordern ist. Hierzu können Vergleicher für Speicheradressen oder auch eine weitere, einstellbare Adressverschränkung dienen. Diese hierzu benötigten Adressverwalter sind aus der Herstellung von Mehrprozessorrechnern mit Bussystemen bekannt.

In jedem Fall sind mehrfache Bussysteme vorhanden, um die Speicheranforderungen der Zentraleinheiten untereinander abzuwickeln. Damit ist ein wesentlicher Engpaß der bisherigen Mehrrechner-Systeme beseitigt, ohne daß für die Ansteuerung der Bussysteme ein wesentlicher Zusatzaufwand notwendig ist. Werden, wie oben und in Fig. 2 bzw. 4 dargestellt, zwei oder vier Zentraleinheiten der bevorzugten Form zu einer Vierfach- oder Achtfach-Scheibe kombiniert, so sind vier bzw. acht Bussysteme vorhanden, um den Datenverkehr zwischen den Zentraleinheiten des Mehrprozessorsystems abzuwickeln. Falls also beispielsweise die Bussysteme bis zu zehn Steckplätze für Zentraleinheiten zulassen, können mit ein und demselben Doppelprozessor-Zentraleinheiten-Modul Rechnersysteme von zwei bei achtzig Prozessoren aufgebaut werden, wobei die Rechenleistung fast linear mit der Anzahl der Prozessoren steigt, ohne daß ein einziges Bussystem einen Engpaß darstellt.

Wie sich aus Fig. 2 und 4 ergibt, erlaubt die Doppelprozessor-Zentraleinheit der bevorzugten Ausführungsform, wie oben bereits implizit vorausgesetzt, auch die Möglichkeit, die Zentraleinheiten so anzuordnen, daß die einzelnen Bussysteme minimale Länge haben und sich nicht überkreuzen. Dazu sind zwar für die maximalen Ausbaustufen von 20, 40 und 80 Prozessoren andere Aufnahmen für die Zentraleinheiten-Moduln notwendig; die Zentraleinheiten bleiben jedoch dieselben.

In der Anordnung nach Fig. 3 kann zudem, indem die Direktverbindungen benachbarter Zentraleinheiten jeweils paarweise verbunden werden, auch mit einer linearen Anordnung eine Kombination von bis zu acht Vierfach-Scheiben erreicht werden, indem lediglich die verbindende Rückwand entsprechend gestaltet wird. Dabei kann einerseits, wie in Fig. 3 dargestellt, mit zwei Bussystemen gearbeitet werden, wobei jeweils zwei Koppler einer Vierfach-Scheibe denselben Bus benutzen. Lediglich ist in dieser Schaltungsart die Anzahl der Prozessoren auf 4, 8, 12 oder 16 eingeschränkt. Dabei kann die Rückwand von vornherein die Stecker und Verbindungen dieser Art aufweisen; die Firmware-Konfigurierung der Zentraleinheiten entscheidet darüber, ob die Direktverbindungen zu den anderen Moduln verwendet werden. Der Kunde kann also zunächst durch einzelne Zentraleinheiten, also in Zweierschritten bezogen auf Prozessoren, sein System erweitern. Sind eine gerade Anzahl von Prozessoren vorhanden, so können diese in Vierfach-Scheiben von je zwei Prozessoren umkonfiguriert werden.

Durch eine Verbesserung der Rückwand, bei der, wie in Fig. 5 schematisch dargestellt, jeder Busanschluß einer Zentraleinheit mit der übernächsten Zentraleinheit verbunden ist, werden vier Bussysteme bereitgestellt. Damit wird die volle Leistung bei Vierfach-Scheiben erreicht. Die Bussysteme werden auf einer Seite durch Abschlüsse 51, 52 abgeschlossen. Verbindungsschalter 53, 53 verbinden im geschlossenen Zustand die vier Bussegmente zu zwei Bussystemen. Im geöffneten Zustand werden die Bussysteme mit (nicht gezeigt) weiteren Abschlüssen verbunden, so daß vier Bussysteme entstehen. Damit kann beim Kunden auf einfache Art die Anzahl der Bussysteme gesteigert und damit die Leistung des Systems nahezu proportional zur Anzahl der installierten Zentraleinheiten gesteigert werden.

Mit dieser Rückwand ist auch eine einfache Variante der Zentraleinheit möglich, die durch Verteilung der bislang beschriebenen Doppelprozessor-Zentraleinheit auf zwei Moduln erreicht wird. Jeder dieser EinprozessorZentraleinheiten hat einen Prozessor, einen Speicher, einen Koppler und sowohl einen Bus- als auch einen Direktanschluß. Als verbindenden Rückwand wird eine Anordnung nach dem oberen Teil der Fig. 5, jedoch mit festen Abschlüssen anstelle der Schalter, verwendet, so daß physisch eine einzige Reihe vorliegt, die aber zwei getrennte Bussysteme bedient. Die Direktschnittstellen werden paarweise miteinander verbunden. Indem nunmehr je zwei Prozessoren durch die Direktschnittstellen verbunden und zwei Bussysteme vorhanden sind, wird eine mehr als doppelte so große Transportleistung gegenüber einen bekannten Bussystem erreicht. Dieselben EinprozessorZentraleinheiten können für eine herkömmliche Rückwand mit einem einzigen Bussystem verwendet werden, indem die Koppler derart konfiguriert werden, daß sie von der Direktschnittstelle keinen Gebrauch machen, und mit der speziellen Rückwand einen Rechner bilden, der mit jeweils zwei Einprozessorzentraleinheiten erweitert werden kann und dennoch eine hohe, eheblich weniger als bislang durch die maximale Bandbreite des Bussystems begrenzte Bandbreite erreicht.

Bei Hochleistungsrechnern sind üblicherweise Pufferspeicher (Cache) vorzusehen, um eine gute Verarbeitungsleistung der Zentraleinheit zu erreichen. Da diese Cache-Speicher auch einen wesentlichen Teil der Lokalität von Datenzugriffen auffangen, stellt sich die Adressverschränkung eher als Vorteil dar. Insbesondere wird dabei die Granularität auf eine Cache-Zeile erhöht. Cache-Speicher gehören zum jeweiligen Prozessor und liegen konzeptuell (nicht gezeichnet) in der Verbindung zwischen Prozessor selbst und Koppler. Die Cache-Steuerungen sind häufig auf dem Prozessorchip mit enthalten, so daß der Prozessor eine Direktverbindung zu dem Cache-Speicher hat und der Cache von der Verbindung zum Koppler durch den Prozessor mitbedient wird.

Für Cache-Systeme gibt es zwei bevorzugt benutzte Verfahren, um bei einem gemeinsamen Adressraum eine virtuelle gleichzeitige Verfügbarkeit aller Speicherinhalte, d.h. einen uniformen Speicher, für alle Prozessoren zu erreichen. Hinweise hierzu finden sich beispielsweise in dem Artikel "A Class of Compatible Cache Consistency Protocols and their Support by the IEEE Futurebus" von P. Sweazey and A.J. Smith, Proc. 13th Int. Symp. on Computer Architecture, IEEE 1986.

Das eine dieser Verfahren wird mit "snooping" bezeichnet. Es besteht darin, daß zumindest die Adressen aller den Status des Cache verändernden Operationen auf einem Bussystem gleichzeitig an alle Cacheeinheiten weitergegeben werden, so daß diese den neuen Status notieren können. Dieses Verfahren ist auch bei der Zentraleinheit nach der Erfindung möglich, weil jeder Koppler anhand der Adresse bestimmen kann, ob die Adresse über eine Direktverbindung an einen anderen Koppler gesendet oder auf das Bussystem gelegt wird. In diesem Fall ist auch eine Variante der Erfindung möglich, bei der die beiden Bussysteme 15 und 25 zwar getrennte Adressleitungen haben, aber gemeinsame Datenleitungen benutzen. Da ein Großteil der Buszyklen reine Adresszyklen zum Cache-Abgleich sind, können beide Busse die Datenleitungen teilen. Da die Adressbusse weiterhin überwiegend 32 Bit breit sind, Datenbusse aber mindestens 64, meist 128 oder 256 Bit breit sind, kann so eine erhebliche Anzahl von Anschlüssen eingespart werden, ohne daß eine signifikante Verschlechterung der Leistung erfolgt. Beziehungsweise erreicht die erfindungsgemäße Doppel-Zentraleinheit mit Adressverschränkung eine Verdopplung der Geschwindigkeit von Cache-Abgleichen mit nur 32 weiteren Anschlüssen an die Rückwand.

Bevorzugt wird mit der Erfindung jedoch ein Verfahren zum Cache-Abgleich verwendet, welches als "tagged" oder "directory based" bezeichnet wird. Hierbei wird im jeweiligen Speicher selbst ein zusätzlicher Indikator geführt, der mit einem Verweis auf den anfordernden Cache gesetzt wird, wenn ein Prozessor ein Speicherwort angefordert und erhalten hat, um es zu verändern. Greift ein zweiter Prozessor auf dasselbe Speicherwort (Cache-Line) zu, so wird dieser Zugriff auf den Cache-Speicher des ersten Prozessors umgelenkt oder aufgeschoben, bis der Cache-Eintrag des ersten Cache-Speichers invalidiert und in den Hauptspeicher zurücktransportiert worden ist. Der Aufschub kann durch Abbruch und Wiederholung des Zugriffsversuchs erfolgen. Auch beim "directory based" Cache-Koheränz-Verfahren ist ein erheblicher Datentransfer zu bewältigen. Die Erfindung erlaubt es auf einfache Art, diesen gleichmäßig über mehrere Bussysteme zu verteilen. Weitere Hinweise für die Verwendung von "directory-based" Cache-Koheränz-Verfahren finden sich z.B in dem Artikel "Torus with slotted rings architecture for a cache-coherent multiprozessor", Proc. 1994 Int. Conf. on Parallel and Distributed Systems, S. 76-81, IEEE Comp. Soc. Press 1994.

Insbesondere die bevorzugte Variante mit zwei Prozessoren, Speichern, Kopplern, Kopplerschnittstellen und Busschnittstellen erlaubt es also, mit einem einzigen Typ von Zentraleinheit Systeme mit von zwei bis achtzig Prozessoren aufzubauen, ohne daß besonders lange Bussysteme benötigt werden oder die Leistung der Prozessoren durch ein einziges Bussystem begrenzt wird.

Die bislang beschriebene bevorzugte Ausführungsform der Erfindung verwendet eine Aufteilung nach Potenzen von zwei, d.h. zwei, vier oder acht Prozessoren pro Prozessorscheibe. Es ist jedoch auch möglich, drei (oder mehr) Prozessoren zu verwenden. Hierbei sind zwei Varianten möglich. Die erste Variante entspricht der Ausführungsform mit zwei Kopplern und versieht auch den dritten Koppler mit einer Direktschnittstelle und einer Busschnittstelle. Die andere Variante verzichtet für den mittleren Koppler auf eine Direktschnittstelle und eine Busschnittstelle. Alle nicht lokalen Speicherzugriffe werden an einen der benachbarten Koppler weitergegeben.

Sofern die Anzahl der Speicherbänken keine Potenz von Zwei ist, wird man deren Größe für das Interleaving relativ groß wählen, so daß eine vergleichsweise geringe Anzahl von Blöcken entsteht. Die Auswahl erfolgt durch einen Festwertspeicher (PROM), dessen Adressleitungen mit den oberen Adressbits versorgt werden und dessen Datenbyte die Nummer der verschränkten Speicherbank darstellt. Bei drei Gruppen und 5 Adressbits besteht der Inhalt des Festwertspeichers aus den 32 Werten 0, 1, 2, 0, 1, 2 , u.s.w., d.h. die Adresse modulo drei. Festwertspeicher mit 16 Adressleitungen sind in der benötigten Geschwindigkeit verfügbar, so daß bei dreifacher Adressverschränkung jede Gruppe in 65536 Zeilen aufgeteilt wird. Werden zwei von solchen Zentraleinheiten miteinander verbunden, so wird das unterste Bit für die Auswahl der Zentraleinheit verwendet und so eine Adressverschränkung mit 6 Gruppen auf einfache Art erreicht.

## Patentansprüche

1. Zentraleinheit (10) mit mindestens zwei Gruppen von je einem Prozessor (11, 21), einem Koppler (13, 23), einem Speicher (12, 22) und einer Busschnittstelle (15, 25), wobei die Befehle der Prozessoren (11, 12) einen gemeinsamen Adressraum verwenden, in dem der Speicher (12, 22) enthalten ist, und
- jeder Koppler (13, 23) mit dem Prozessor (11, 21), dem Speicher (12,22) und der Busschnittstelle (15,25) seiner Gruppe sowie mit mindestens einem Koppler einer anderen Gruppe direkt sowie mit jedem anderen Koppler zumindest indirekt verbunden ist,
- der Koppler einen Speicherzugriff des direkt angeschlossenen Prozessors anhand einer Adresszuordnung, basierend auf der von dem Prozessor übergebenen Adresse,
* von dem direkt angeschlossenen Speicher (12, 22) erfüllt,
* an einen anderen Koppler (13, 23) zwecks Zugriff auf den dort zugreifbaren Speicher (12, 22) weiterleitet,
* oder über die Busschnittstelle (15, 25) durchführt.

2. Zentraleinheit nach Anspruch 1 mit drei oder mehr Gruppen, wobei mindestens ein Koppler mit zwei anderen Kopplern direkt derart verbunden ist, daß die Koppler eine Reihe oder einen Ring bilden und ein Koppler einen nicht direkt verbundenen Koppler mittels eines direkt verbundenen Koppler adressieren und zur Erfüllung eines Speicherzugriffs in gleicher Art wie einen direkt angeschlossenen Koppler veranlassen kann.

3. Zentraleinheit nach Anspruch 1 oder 2, wobei die Zentraleinheit zusätzlich zwei Direktschnittstellen aufweist, die mit je einem Koppler verbunden sind, und die Koppler derart konfiguriert werden können, daß bei paarweiser Verbindung der Direktschnittstellen zweier gleicher Zentraleinheiten eine virtuelle Zentraleinheit mit mindestens vier Gruppen, ringförmig verbundenen Kopplern und vier Busschnittstellen entsteht.

4. Zentraleinheit (10) mit einem Prozessor (11), einem Koppler (13), einem Speicher (12), einer Busschnittstelle (15) und einer Direktschnittstelle (14), wobei die Befehle des Prozessors (11) einen Adressraum verwenden, in dem der Speicher (12, 22) enthalten ist, und
- der Koppler (13) mit dem Prozessor (11), dem Speicher (12), der Busschnittstelle (15) und der Direktschnittstelle (14) verbunden ist,
- die Direktschnittstelle (14) mit genau einer Direktschnittstelle einer zweiten gleichartigen Zentraleinheit verbindbar ist,
- der Koppler einen Speicherzugriff des Prozessors anhand einer Adresszuordnung, basierend auf der von dem Prozessor übergebenen Adresse,
* von dem Speicher (12, 22) erfüllt,
* über die Direktschnittstelle (14, 24) an einen Koppler einer gleichartigen Zentraleinheit zwecks Zugriff auf den dort angeschlossenen Speicher weiterleitet,
* oder über die Busschnittstelle (15, 25) durchführt.

5. Zentraleinheit nach einem der Ansprüche 1 bis 4, wobei die Adresszuordnung jeden Speicher als zusammenhängenden Block in den gemeinsamen Adressraum abbildet.

6. Zentraleinheit nach einem der Ansprüche 1 bis 4, wobei die Adresszuordnung durch Adressverschränkung erfolgt, indem jeder Speicher auf mindestens zwei nicht aneinander grenzende Teile des Adressraums verteilt wird.

7. Zentraleinheit nach einem der Ansprüche 1 bis 5, wobei die Adresszuordnung für die Koppler durch Adressverschränkung erfolgt und der so adressierte Koppler bestimmt, ob die Adresse zu dem direkt angeschlossenen Speicher gehört und andernfalls über die durch das Bussystem vorgegebene Adressauflösung den Speicherzugriff tätigt.

8. Zentraleinheit nach Anspruch 6 oder 7, wobei die Adressverschränkung durch Extraktion eines Bitfeldes der binär dargestellten Adresse erfolgt.

9. Zentraleinheit nach Anspruch 8, wobei die Zuordnung durch Adressverschränkung über die Adressbits der höchsten Wertigkeit erfolgt, welche einen die Zuordnung enthaltenden Speicher adressieren.

10. Zentraleinheit nach einem der vorhergehenden Ansprüche, wobei je zwei Bussysteme getrennte Adress- und Steuerleitungen, jedoch gemeinsame Datenleitungen verwenden, welche über Umschalter und Zugriffsteuerungen bei Bedarf von dem jeweiligen Bus benutzt werden.

11. Zentraleinheit nach einem der vorherigen Ansprüche, wobei die Direktschnittstelle (14) nicht funktionsfähig ist, jedoch durch Hinzufügen von Bauelementen an dafür vorgesehenen Stellen funktionsfähig machbar ist.

12. Anordnung von mindestens zwei gleichen Zentraleinheiten nach einem der Ansprüche 3 bis 11, wobei die Direktschnittstellen unterschiedlicher Zentraleinheiten paarweise miteinander verbunden sind.

13. Anordnung von gleichen Zentraleinheiten nach einem der vorhergehenden Ansprüche, wobei mindestens zwei getrennte Bussysteme die Busschnittstellen der Zentraleinheiten verbinden.

14. Anordnung von gleichen Zentraleinheiten nach Anspruch 13, wobei die Zentraleinheiten in einer Reihe angeordnet sind und eine Busschnittstelle einer Zentraleinheit mit der Busschnittstelle der jeweils übernächsten Zentraleinheit verbunden ist.

15. Anordnung nach Anspruch 14, wobei ein Schalter vorhanden ist, durch den zwei Bussysteme zu einem einzigen verbindbar sind.

16. Anordnung nach Anspruch 15, wobei der Schalter die benachbarten Enden der Bussysteme anstelle von Abschlüssen verbindet.

17. Anordnung nach einem der Ansprüche 13 bis 16, wobei soviele Bussysteme verwendet werden, daß jede Schnittstelle einer Zentraleinheit mit einem Bussystem verbunden ist und kein Bussystem zwei Busschnittstellen derselben Zentraleinheit verbindet.

18. Rückwand zur Verbindung mehrerer Zentraleinheiten in einer Anordnung nach den Ansprüchen 12 bis 17.

19. Betriebsverfahren für eine Zentraleinheit nach einer der Ansprüche 1 bis 11, wobei die Zentraleinheit einen Pufferspeicher (Cache) aufweist, dessen Kohärenz durch Schnüffeln (snooping) erreicht wird, indem jeder Koppler die von ihm auf dem direkt angeschlossenen Speicher durchgeführten Speicherzugriffe auf dem mit ihm direkt verbundenen Bus bekanntgibt und seinerseits eine auf dem Bus erscheinende Adresse gemäß der Adresszuordnung entweder dem direkt angeschlossenen Prozessor oder über eine Direktverbindung an einen anderen Koppler weiterreicht.

20. Betriebsverfahren für eine Zentraleinheit nach einer der Ansprüche 1 bis 11, wobei die Zentraleinheit einen Pufferspeicher (Cache) aufweist, dessen Kohärenz durch Verweise (directories) erreicht wird.

## Claims

1. Central processing unit (10) comprising at least two groups of in each case one processor (11, 21), one coupler (13, 23), one memory (12, 22) and one bus interface (15, 25), in which the instructions of the processors (11, 12) use a shared address space which contains the memory (12, 22) and
- each coupler (13, 23) is connected directly to the processor (11, 21), the memory (12, 22) and the bus interface (15, 25) of its group and to at least one coupler of another group and is connected at least indirectly to each other coupler,
- the coupler meets a memory access of the directly connected processor,
* from the directly connected memory (12, 22),
* forwards this memory access to another coupler (13, 23) for the purpose of accessing the memory (12, 22) which is accessible there,
* or executes this access via the bus interface (15, 25),
by means of an address allocation based on the address transferred by the processor.

2. Central processing unit according to Claim 1, comprising three or more groups, in which at least one coupler is connected directly to two other couplers in such a manner that the couplers form a row or a ring and a coupler can address a coupler which is not directly connected by means of a coupler which is connected directly and can cause it to meet a memory access in the same manner as a directly connected coupler.

3. Central processing unit according to Claim 1 or 2, in which the central processing unit additionally exhibits two direct interfaces which are connected to one coupler each, and the couplers can be configured in such a manner that, if the direct interfaces of two identical central processing units are connected in pairs, a virtual central processing unit having at least four groups, couplers connected in the form of a ring and four bus interfaces is produced.

4. Central processing unit (10) comprising one processor (11), one coupler (13), one memory (12), one bus interface (15) and one direct interface (14), in which the instructions of the processor (11) use an address space which contains the memory (12, 22), and
- the coupler (13) is connected to the processor (11), the memory (12), the bus interface (15) and the direct interface (14),
- the direct interface (14) can be connected to exactly one direct interface of a second similar central processing unit,
- the coupler meets a memory access of the processor
* from the memory (12, 22),
* forwards this access via the direct interface (14, 24) to a coupler of a similar central processing unit for the purpose of accessing the memory connected there,
* or executes this access via the bus interface (15, 25),
by means of an address allocation based on the address transferred by the processor.

5. Central processing unit according to one of Claims 1 to 4, in which the address allocation maps each memory as contiguous block in the shared address space.

6. Central processing unit according to one of Claims 1 to 4, in which the address allocation is carried out by address interleaving in that each memory is distributed over at least two non-adjoining parts of the address space.

7. Central processing unit according to one of Claims 1 to 5, in which the address allocation for the couplers is done by address interleaving and the coupler thus addressed determines whether the address belongs to the directly connected memory and, if not, performs the memory access via the address resolution predetermined by the bus system.

8. Central processing unit according to Claim 6 or 7, in which the address interleaving is performed by extracting a bit field of the address represented in binary notation.

9. Central processing unit according to Claim 8, in which the allocation is performed by address interleaving via the most significant address bits which address a memory containing the allocation.

10. Central processing unit according to one of the preceding claims, in which two bus systems in each case use separate address and control lines but shared data lines which, if necessary, are used by the respective bus via jumpers and access controls.

11. Central processing unit according to one of the preceding claims, in which the direct interface (14) is not operable but can be made operable by adding components at places provided for this purpose.

12. Arrangement of at least two identical central processing units according to one of Claims 3 to 11, in which the direct interfaces of different central processing units are connected to one another in pairs.

13. Arrangement of identical central processing units according to one of the preceding claims, in which at least two separate bus systems connect the bus interfaces of the central processing units.

14. Arrangement of identical central processing units according to Claim 13, in which the central processing units are arranged in a row and a bus interface of a central processing unit is connected to the bus interface of the next central processing unit but one in each case.

15. Arrangement according to Claim 14, in which there is a jumper by means of which two bus systems can be connected to form one single one.

16. Arrangement according to Claim 15, in which the jumper connects the adjacent ends of the bus systems instead of terminations.

17. Arrangement according to one of Claims 13 to 16, in which bus systems are used in such a number that each interface of a central processing unit is connected to one bus system and no bus system connects two bus interfaces of the same central processing unit.

18. Backplane for connecting a number of central processing units in an arrangement according to Claims 12 to 17.

19. Operating method for a central processing unit according to one of Claims 1 to 11, in which the central processing unit exhibits a cache, the consistency of which is achieved by snooping in that each coupler reports the memory accesses performed by it on the directly connected memory on the bus connected to it directly and, in turn, forwards an address appearing on the bus in accordance with the address allocation, either to the directly connected processor or to another coupler via a direct connection.

20. Operating method for a central processing unit according to one of Claims 1 to 11, in which the central processing unit exhibits a cache, the consistency of which is achieved by directories.

## Revendications

1. Unité centrale (10) ayant au moins deux groupes comportant chacun un processeur (11, 21), un coupleur (13, 23), une mémoire (12, 22) et une interface de bus (15, 25), dans laquelle les instructions des processeurs (11, 12) utilisent un espace d'adressage commun dans lequel la mémoire (12, 22) est contenue, et
- chaque coupleur (13, 23) est relié au processeur (11, 21), à la mémoire (12, 22) et à l'interface de bus (15, 25) de son groupe ainsi que directement à au moins un coupleur d'un autre groupe et au moins indirectement à chaque autre coupleur,
- à l'aide d'une association d'adresse et sur la base de l'adresse transmise par le processeur, le coupleur répond à un accès en mémoire du processeur raccordé directement
* en le satisfaisant avec la mémoire (12, 22) raccordée directement,
* en le retransmettant à un autre coupleur (13, 23) en vue d'un accès à la mémoire (12, 22) qui y est accessible,
* ou en le mettant en oeuvre par l'intermédiaire de l'interface de bus (15, 25).

2. Unité centrale selon la revendication 1 avec au moins trois groupes, dans laquelle au moins un coupleur est relié directement à deux autres coupleurs de telle sorte que les coupleurs forment une rangée ou un anneau et un coupleur peut adresser un coupleur non relié directement au moyen d'un coupleur relié directement et le solliciter en vue de la réponse à un accès en mémoire de la même manière qu'un coupleur relié directement.

3. Unité centrale selon la revendication 1 ou 2, dans laquelle l'unité centrale comporte en plus deux interfaces directes qui sont reliées chacune à un coupleur et les coupleurs peuvent être configurés de manière à former, dans le cas d'une liaison par paires des interfaces directes de deux unités centrales identiques, une unité centrale virtuelle comportant au moins quatre groupes, des coupleurs reliés en anneau et quatre interfaces de bus.

4. Unité centrale (10) comportant un processeur (11), un coupleur (13), une mémoire (12), une interface de bus (15) et une interface directe (14), dans laquelle les instructions du processeur (11) utilisent un espace d'adressage dans lequel la mémoire (12, 22) est contenue, et
- le coupleur (13) est relié au processeur (11), à la mémoire (12), à l'interface de bus (15) et à l'interface directe (14),
- l'interface directe (14) peut être reliée à exactement une interface directe d'une deuxième unité centrale de même type,
- à l'aide d'une association d'adresse et sur la base de l'adresse transmise par le processeur, le coupleur répond à un accès en mémoire du processeur,
* en le satisfaisant avec la mémoire (12, 22),
* en le retransmettant par l'intermédiaire de l'interface directe (14, 24) à un coupleur d'une unité centrale de même type en vue d'un accès à la mémoire qui y est raccordée,
* ou en le mettant en oeuvre par l'intermédiaire de l'interface de bus (15, 25).

5. Unité centrale selon l'une des revendications 1 à 4, dans laquelle l'association d'adresse reproduit chaque mémoire sous forme de bloc cohérent dans l'espace d'adressage commun.

6. Unité centrale selon l'une des revendications 1 à 4, dans laquelle l'association d'adresse s'effectue par entrelacement d'adresse, chaque mémoire étant répartie sur au moins deux parties non adjacentes de l'espace d'adressage.

7. Unité centrale selon l'une des revendications 1 à 5, dans laquelle l'association d'adresse pour les coupleurs s'effectue par entrelacement d'adresse et le coupleur ainsi adressé détermine si l'adresse appartient à la mémoire directement raccordée et déclenche sinon l'accès en mémoire par l'intermédiaire de la décomposition d'adresse prescrite par le système de bus.

8. Unité centrale selon la revendication 6 ou 7, dans laquelle l'entrelacement d'adresse s'effectue par extraction d'un champ de bits de l'adresse représentée sous forme binaire.

9. Unité centrale selon la revendication 8, dans laquelle l'association s'effectue par entrelacement d'adresse sur les adresses de bits du plus grand poids qui adressent une mémoire contenant l'association.

10. Unité centrale selon l'une des revendications précédentes, dans laquelle à chaque fois deux systèmes de bus utilisent des lignes d'adresse et de commande séparées mais des lignes de données communes qui sont exploitées par l'intermédiaire de commutateurs et de commandes d'accès, selon les besoins, par le bus respectif.

11. Unité centrale selon l'une des revendications précédentes, dans laquelle l'interface directe (14) n'est pas capable de fonctionner mais peut être rendue capable de fonctionner en ajoutant des composants à des emplacements prévus à cet effet.

12. Agencement d'au moins deux unités centrales identiques selon l'une des revendications 3 à 11, dans lequel les interfaces directes de différentes unités centrales sont reliées entre elles par paires.

13. Agencement d'unités centrales identiques selon l'une des revendications précédentes, dans lequel au moins deux systèmes de bus séparés relient les interfaces de bus des unités centrales.

14. Agencement d'unités centrales identiques selon la revendication 13, dans lequel les unités centrales sont agencées en une rangée et une interface de bus d'une unité centrale est reliée à l'interface de bus de l'unité centrale suivant l'unité centrale suivante.

15. Agencement selon la revendication 14, dans lequel il y a un commutateur par lequel deux systèmes de bus peuvent être reliés pour en former un seul.

16. Agencement selon la revendication 15, dans lequel le commutateur relie les extrémités voisines des systèmes de bus à la place des terminaisons.

17. Agencement selon l'une des revendications 13 à 16, dans lequel on utilise un nombre de systèmes de bus tel que chaque interface d'une unité centrale est reliée à un système de bus et aucun système de bus ne relie deux interfaces de bus de la même unité centrale.

18. Panneau arrière pour la liaison de plusieurs unités centrales afin de former un agencement selon les revendications 12 à 17.

19. Procédé d'exploitation pour une unité centrale selon l'une des revendications 1 à 11, dans lequel l'unité centrale comporte une mémoire tampon (cache) dont la cohérence est obtenue par "snooping", du fait que chaque coupleur transmet les accès en mémoire effectués sur la mémoire qui lui est raccordée directement sur le bus qui lui est relié directement et retransmet pour sa part une adresse apparaissant sur le bus, en fonction de l'association d'adresse, soit vers le processeur raccordé directement, soit vers un autre coupleur par l'intermédiaire d'une liaison directe.

20. Procédé d'exploitation pour une unité centrale selon l'une des revendications 1 à 11, dans lequel l'unité centrale comporte une mémoire tampon (cache) dont la cohérence est obtenue par pointeurs de renvoi (directories).
